# EUROPEAN PATENT APPLICATION

(11) **EP 1 914 684 A1**
(43) Date of publication of application: **23.04.2008**
(21) Application number: 06381040.2
(22) Date of filing: 17.10.2006
(51) Int. Cl.: G06T 17/00

(54) **Identification label containing graphic and/or electromagnetic references for relating a tridimensional shape to a real world object, and method for use thereof**

(71) Applicant: De Espona Delgado, Jose Maria, 28004 Madrid (ES)
(72) Inventor: De Espona Delgado, Jose Maria, 28004 Madrid (ES)

(57) **Abstract**

An identification label containing code bars, marks, graphical elements, radio frequency identifier (RFID) or any other graphical or electromagnetic reference allows the identification of an object using, a number that links the labelled object with data located externally.
The identification label use a device named 3D Form-ID that contains a referenced 3D shape of a real world object.
Said label allows to relate the labelled object with an internal or external file that contains the shape description of the identified object and the necessary spatial references to obtain their spatial position and orientation according to a detection system, using graphical or electromagnetical references included in one or more identification labels printed or adhered over the identified object.

## Description

### 3. DESCRIPTION OF THE PATENT CLAIMS :

### 3.1 DESCRIPTION OF THE PATENT CLAIM 1:

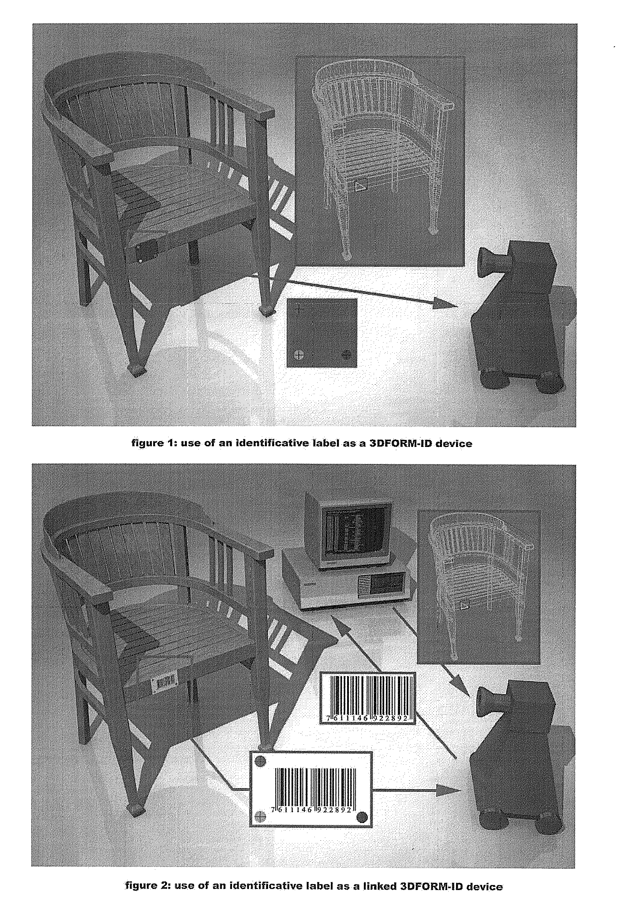

In the same way than in the proceeding described at the european patent EP06381005.5 related to a device named 3DFORM-ID that contains a referenced tridimensional shape of a real world object, the electromagnetical o graphical references contained in the proposed identificative label allows to define at least a reference triangle fixed in the real object identified by the label. Such triangle defined by these spatial points or references are equivalent in their relative coordinates to the real object in the same way a poligon or triangle defined in the same relative position in the tridimensional shape of the object described in a digital file included in a memory device inside the identification label (figure 1: use of an identificative label as a 3DFORM-ID device) or linked by a number or other code to a digital file located externally to the identificative label (figure 2: use of an identificative label as a linked 3DFORM-ID device).

For determining the spatial position and orientation of the identified object, the detection system detects at least three graphic or electromagnetical points in the labeling of the object, and then the detection system compute the spatial position and distance to the detection system of each one of the detected points at the label using a software program that works using spatial triangulation methods.

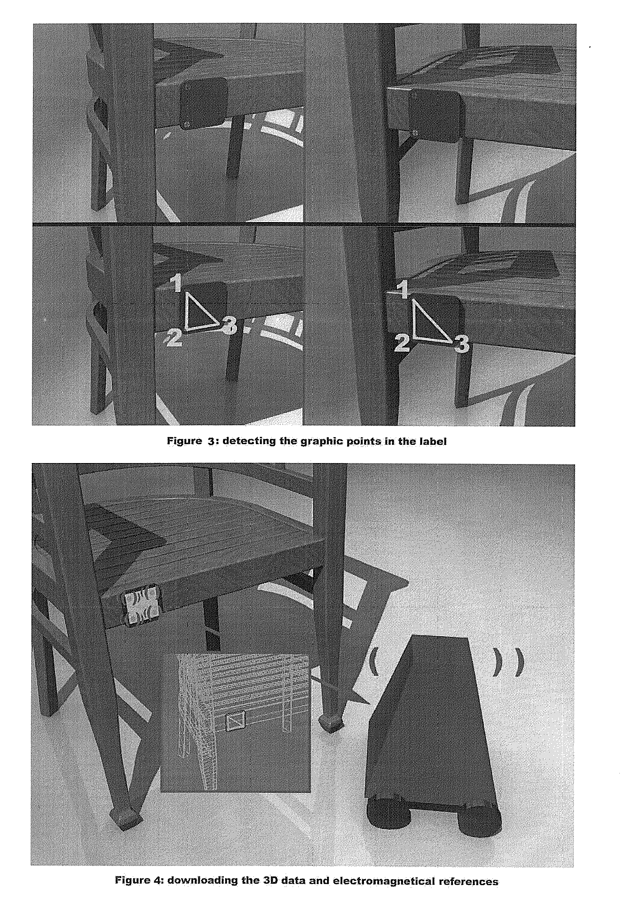

In the case of an identification label that contains graphical points or graphical signals, the detection system uses a stereoscopical camera or also two sequential images obtained in two different spatial positions with a single camera that are capable of reporting their own spatial position and orientation, using any spatial location proceeding (GPS, giroscopes or other method). The two captured images of the identification label or the stereoscopic pair of images done to the label allows to the system obtaining the correlative diferences between both images, thanks to a image processing software, and , after using a computational algorythm that uses spatial triangulation methods, the detection system can determines the spatial position of each graphical reference contained in the identification label in relation to the own detection system (figure 3).

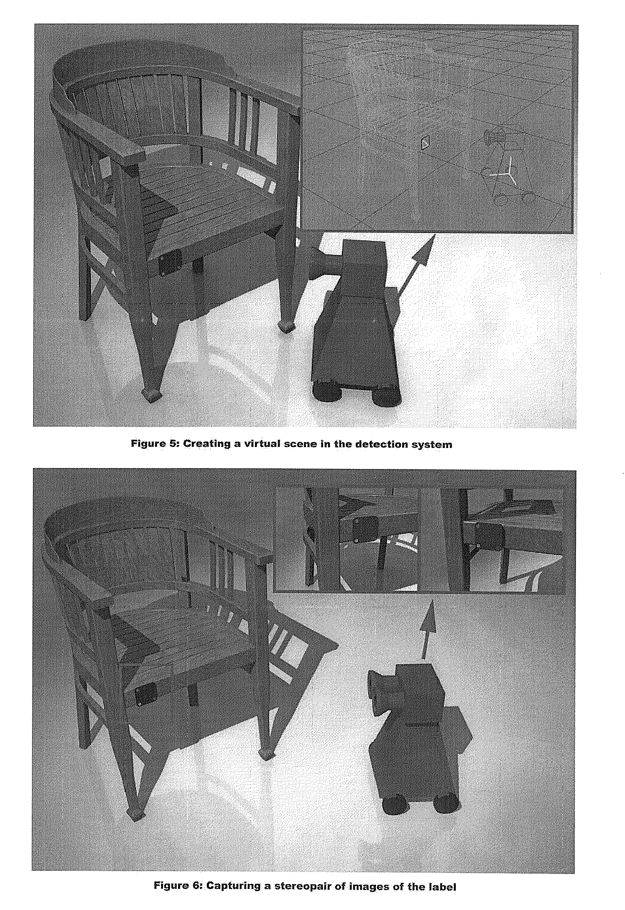

In the case of an identification label that contains electromagnetical references, the detectable points located in the label can be active emitters of the detectable electromagnetical signal, or passive emitters thanks to the induced energy provided by the own detection system or by any other external source. Such electromagnetic signals allows to the detection system determining the distance and spatial position of each one of the detected points contained at the identification label (figure 4).

Simultaneously, or once have been determined the spatial position of the points in the identification label, the detection system proceeds to download from the label the file containing the referenced tridimensional shape of the identified object, or a number, a drawing or a name linked to an external file that contains the referenced tridimensional shape description of the identified object. Such file with the tridimensional shape of the identified object also contains in their coordinate structure the relative position where the identification label must be positioned in the real object, using at least three spatial coordinates or a reference poligon. The software program contained at the detection system can match the coordinates of the points detected at the identification label fixed into the real object, with the fixed positions defined for the label into the virtual model description, obtaining a virtual scene where the position and orientation of the virtual object downloaded from the included or linked file in relation to the virtual representation of the detection system, coincides or is equivalent to the position and orientation of the real object in relation to the detection sytem in the real world (figure 5).

### 3.2 DESCRIPTION OF THE PATENT CLAIM 2:

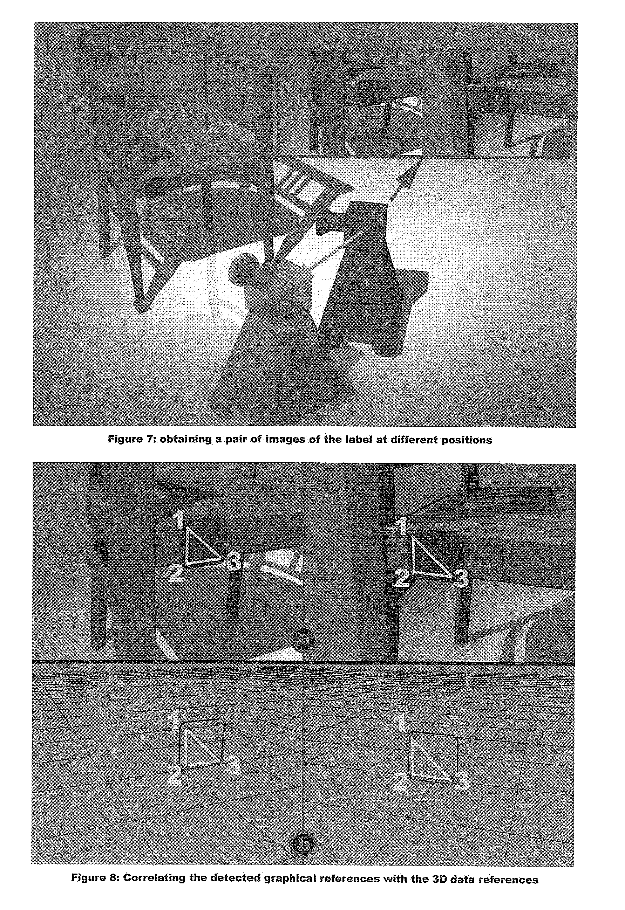

The graphic references included into the identification label allows the definition of a reference triangle that allows to the detection system to obtain the position and orientation of the identified object related to the detection system. Such detection system must obtain an stereoscopic pair of different images of the identification label (figure 6), or two sequential images obtained from different spatial positions of the detection point (figure 7).

In this last case, for knowing the absolute spatial position and orientation of the detection system, it can be necessary that the detection system will contains the accurate positioning merhod (GPS, Galileo, giroscopes, or other spatial reference system), In the case of an stereographic device,it can be defined their own reference system with the center located inside the own detection system.

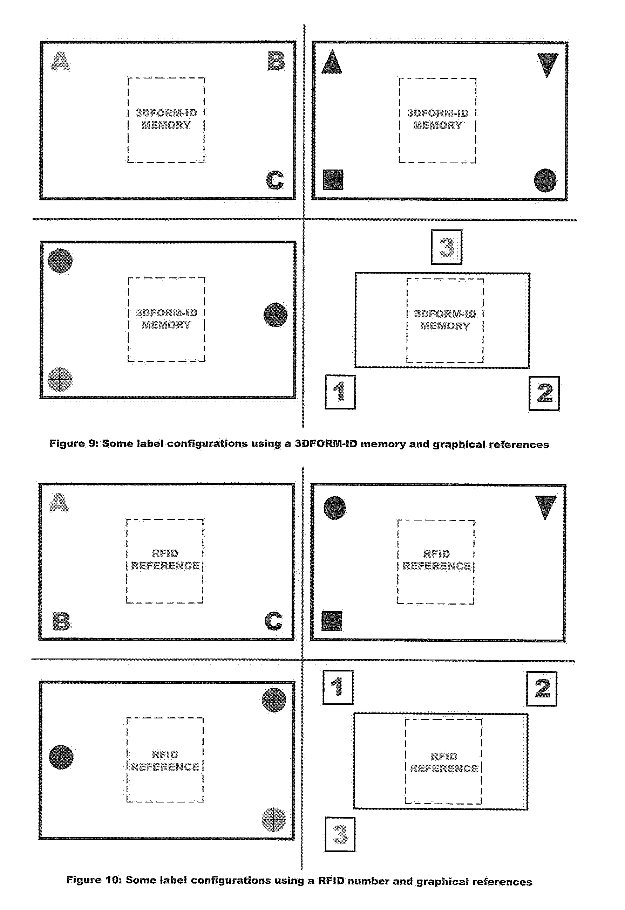

The software that allows the spatial allocation and the orientation of the identificative label can be configured in many ways, but basically must correlate the steroscopic pair of images using triangulation methods (figure 8.a). Also can be used a software capable of calculating the spatial position, the distance and the orientation from a single captured image, by using the size information of the identificative label codified in the tridimensional shape description included in the 3DFORM-ID memory and the focal aperture of the camera, obtaining the own camera position relative to the identified object thanks to a technique named "camera matching".

Once located the spatial position and orientation of the identificative label and created a reference triangle in the virtual memory of the detection system, the software must download the 3DFORM-ID memory content, that is, the referenced tridimensional shape of the identified object, and after founding in this shape the reference points that are related to the virtual representation of the identification label, the software must repositioning and reorienting these points and the associated object's shape until matching them with the reference triangle obtained from the real world identificative label, obtaining in this way the exact position and orientation of the whole virtual model referenced to the virtual representation of the detection system (figure 8.b). To allow an effective interaction between the detection system and the identified real world object, the virtual shape model contained in the 3DFORM-ID memory must be defined in real world units, and also the software for the analisis of the images and for the creation of virtual scenes must work in real world units.

Also can be extracted the spatial position and orientation of the identificative label by using one or more enough complex geometrical designs printed in the label, or logos or letters or the shape of the own identificative label. If this is done in this way, then these geometrical shapes printed or implemented in the own label must be also codified tridimensionally in the 3D shape of the identified object included in the 3DFORM-ID memory. Then the software for the analisis of the captured images can identify the most relevant points into the geometrical designs and determining the distance and orientation using the size information of the label and the distortion resulting from the perspective and the camera's point of view, being then the software capable to correlate the image of the captured geometric design of the real label with the geometric design description contained into the tridimensional shape of the virtual model stored at the 3DFORM-ID memory contained into the identificative label.

In (figure 9) can be seen some few examples of the many configurations that can be used for this type of identificative label.

### 3.3 DESCRIPTION OF THE PATENT CLAIM 3:

The working method of the identification label described at claim 3 is similar to those described in the 3.2 description of the claim 2, but in this case, the tridimensional shape description of the identified object isn't included in the own label, but into an external file located in the own detection system or in a remote archive that can be accesed via internet or using any other access method. For obtaining this file, the detection system must read into the RFID memory a number or a reference code that allows searching the file that contains the referenced tridimensional shape of the identified object, and also the spatial references included in the file that belongs to the virtual representation of the identificative label. This type of label is defined as a graphical identification label containing a linked 3DFORM-ID device using an RFID number.

In (figure 10) can be seen some few examples of the many configurations that can be used for this type of identification label.

### 3.4 DESCRIPTION OF THE PATENT CLAIM 4:

The working method of the identification label described at claim 4 is similar to those described in the 3.2 description of the claim 2, but in this case, the tridimensional shape description of the identified object isn't included in the own label, but into an external file located in the own detection system or in a remote archive that can be accesed via internet or using any other access method. For obtaining this file, the detection system must read into the bar code a number or a reference code that allows searching the file that contains the referenced tridimensional shape of the identified object, and also the spatial references included in the file that belongs to the virtual representation of the identificative label. This type of label is defined as a graphical identification label containing a linked 3DFORM-ID device using a code bar number.

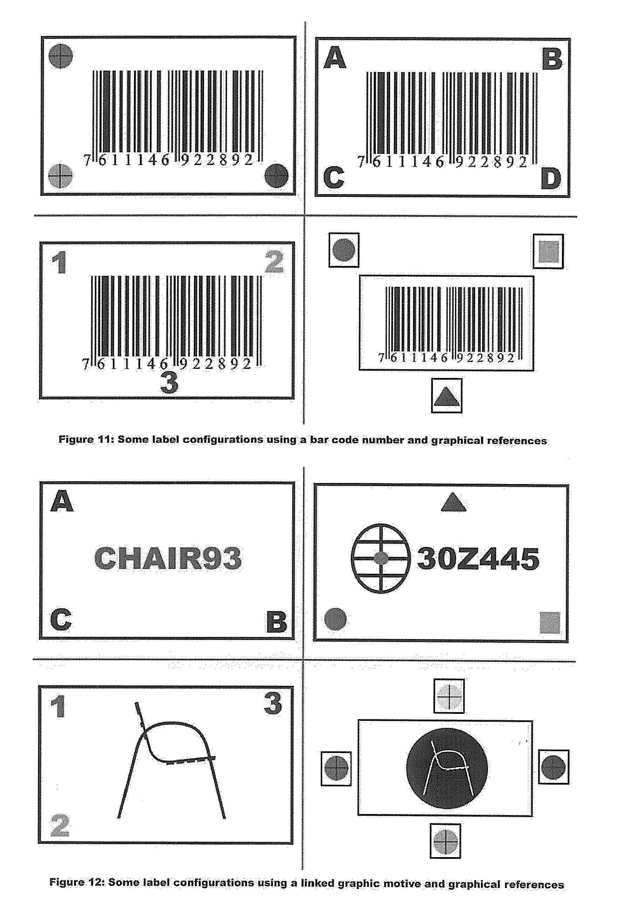

In (figure 11) can be seen some few examples of the many configurations that can be used for this type of identification label.

### 3.5 DESCRIPTION OF THE PATENT CLAIM 5:

The working method of the identification label described at claim 5 is similar to those described in the 3.2 description of the claim 2, but in this case, the tridimensional shape description of the identified object isn't included in the own label, but into an external file located in the own detection system or in a remote archive that can be accesed via internet or using any other access method. For obtaining this file, the detection system must use a camera for capturing the geometric design, the logo or the group of numbers and/or letters or the reference drawing to be compared with a graphic library contained into the detection system or in another remote site accesed via internet or using any other method of access. Such library allows linking the label's graphic design, logo, profile or drawing with a file that contains the referenced tridimensional shape of the identified object, and also the spatial references included in the file that belongs to the virtual representation of the identificative label. This type of label is defined as a graphical identification label containing a linked 3DFORM-ID device using a graphic motive.

In (figure 12) can be seen some few examples of the many configurations that can be used for this type of identification label.

### 3.6 DESCRIPTION OF THE PATENT CLAIM 6:

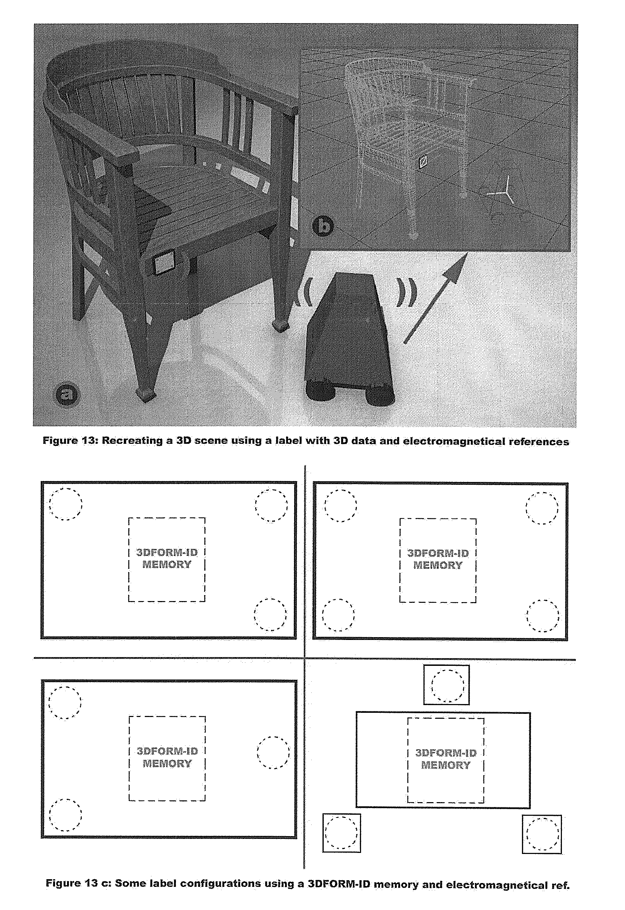

The electromagnetical references included into the identification label allows the definition of a reference triangle that allows to the detection system to obtain the position and orientation of the identified object related to the detection system. Such electromagnetical references can emiting an electromagnetical signal detectable by the detection system, by using an energy source included also into the identificative label (an active label) or using an induced energy provided by the detection system or other external source (a pasive label). It can be defined a reference system with the center of coordinates located in the own detection system. But for knowing the absolute spatial position and orientation of the detection system, it can be necessary that the detection system will contains the accurate positioning merhod (GPS, Galileo, giroscopes, or other spatial reference system).
The software that allows the spatial allocation and the orientation of the identificative label can be configured in many ways, but basically must compute the spatial position of each of the label's detected points, using triangulation methods (figure 13.a). Once located the spatial position and orientation of the identificative label and created a reference triangle in the virtual memory of the detection system, the software must download the 3DFORM-ID memory content, that is, the referenced tridimensional shape of the identified object, and after founding in this shape the reference points that are related to the virtual representation of the identification label, the software must repositioning and reorienting these points and the associated object's shape until matching them with the reference triangle obtained from the real world identificative label, obtaining in this way the exact position and orientation of the whole virtual model referenced to the virtual representation of the detection system (figure 13.b). To allow an effective interaction between the detection system and the identified real world object, the virtual shape model contained in the 3DFORM-ID memory must be defined in real world units, and also the software for the detection of the electromagnetical points and for the creation of virtual scenes must work in real world units.

In (figure 13.c) can be seen some few examples of the many configurations that can be used for this type of identificative label.

### 3.7 DESCRIPTION OF THE PATENT CLAIM 7:

The working method of the identification label described at claim 7 is similar to those described in the 3.6 description of the claim 6, but in this case, the tridimensional shape description of the identified object isn't included in the own label, but into an external file located in the own detection system or in a remote archive that can be accesed via internet or using any other access method. For obtaining this file, the detection system must read into the RFID memory a number or a reference code that allows searching the file that contains the referenced tridimensional shape of the identified object, and also the spatial references included in the file that belongs to the virtual representation of the identificative label. This type of label is defined as an electromagnetical identification label containing a linked 3DFORM-ID device using an RFID number.

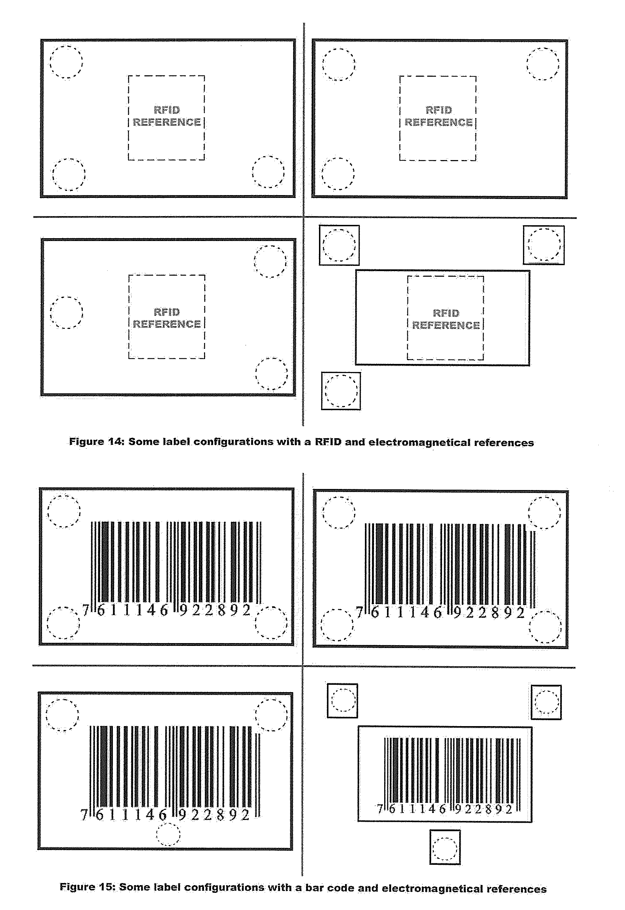

In (figure 14) can be seen some few examples of the many configurations that can be used for this type of identificative label.

### 3.8 DESCRIPTION OF THE PATENT CLAIM 8:

The working method of the identification label described at claim 8 is similar to those described in the 3.6 description of the claim 6, but in this case, the tridimensional shape description of the identified object isn't included in the own label, but into an external file located in the own detection system or in a remote archive that can be accesed via internet or using any other access method. For obtaining this file, the detection system must read into the bar code a number or a reference code that allows searching the file that contains the referenced tridimensional shape of the identified object, and also the spatial references included in the file that belongs to the virtual representation of the identificative label. This type of label is defined as an electromagnetical identification label containing a linked 3DFORM-ID device using a code bar number.

In (figure 15) can be seen some few examples of the many configurations that can be used for this type of identificative label.

### 3.9 DESCRIPTION OF THE PATENT CLAIM 9:

The working method of the identification label described at claim 9 is similar to those described in the 3.6 description of the claim 6, but in this case, the tridimensional shape description of the identified object isn't included in the own label, but into an external file located in the own detection system or in a remote archive that can be accesed via internet or using any other access method. For obtaining this file, the detection system must use a camera for capturing the geometric design, the logo or the group of numbers and/or letters or the reference drawing to be compared with a graphic library contained into the detection system or in another remote site accesed via internet or using any other method of access. Such library allows linking the label's graphic design, logo, profile or drawing with a file that contains the referenced tridimensional shape of the identified object, and also the spatial references included in the file that belongs to the virtual representation of the identificative label. This type of label is defined as an electromagnetical identification label containing a linked 3DFORM-ID device using a graphic motive.

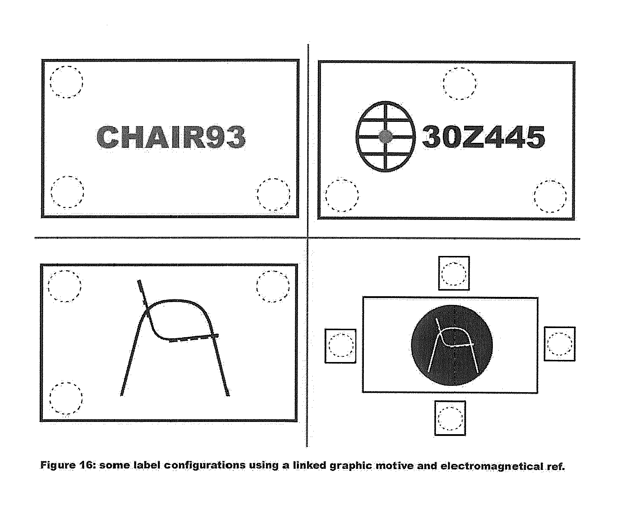

In (figure 16) can be seen some few examples of the many configurations that can be used for this type of identification label.

### 3.10 DESCRIPTION OF THE PATENT CLAIM 10:

The working method of the identification label described at claim 10 is similar to those described in the descriptions of the claims 3.6 and 3.2, but combining in any way the electromagnetical and graphical references located into the label for the definition of a reference triangle that allows to the detection system to obtain the position and orientation of the identified object related to the detection system. Also allows the combination of any type of 3DFORM-ID device containing a referenced tridimensional shape of the identified object, and also any type of a linked 3DFORM-ID device, that is, using RFIDs, bar codes or graphical designs that links the identificative label with an external file that contains the referenced tridimensional shape of the identified object, and also the spatial references included in the file that belongs to the virtual representation of the identificative label.
The mission of this combined configuration for the identificative label is offering to a 3DFORM-ID device a type of "high security" redundant label, for securing in one way or another the downloading of the tridimensional shape of the identified object and providing their relative position and orientation in any circumstance, allowing the creation of a virtual scene by any type of detection system or on despite would occurs a partial failure in the detection process of some of the label's reference points or if the content of some of the memories at the label are accidentally removed or damaged.

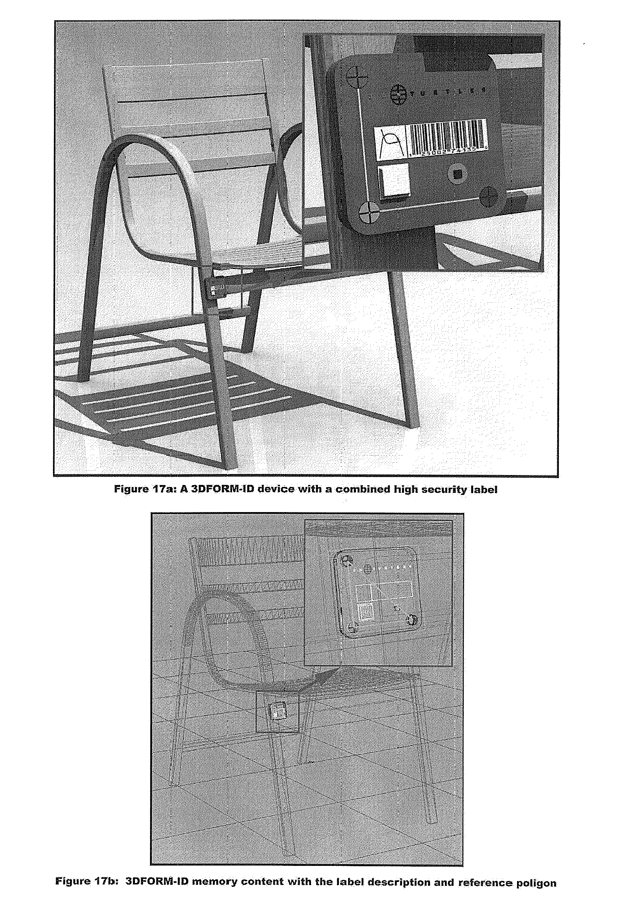

In (figure 17.a) can be seen a 3DFORM-ID device label with a high security combined configuration of identificative elements, attached to a real object.

In (figure 17.b) is shown the tridimensional content included into the 3DFORM-ID, as the referenced tridimensional shape of the identified object, and also the spatial references included in the file that belongs to the virtual representation of the identificative label.

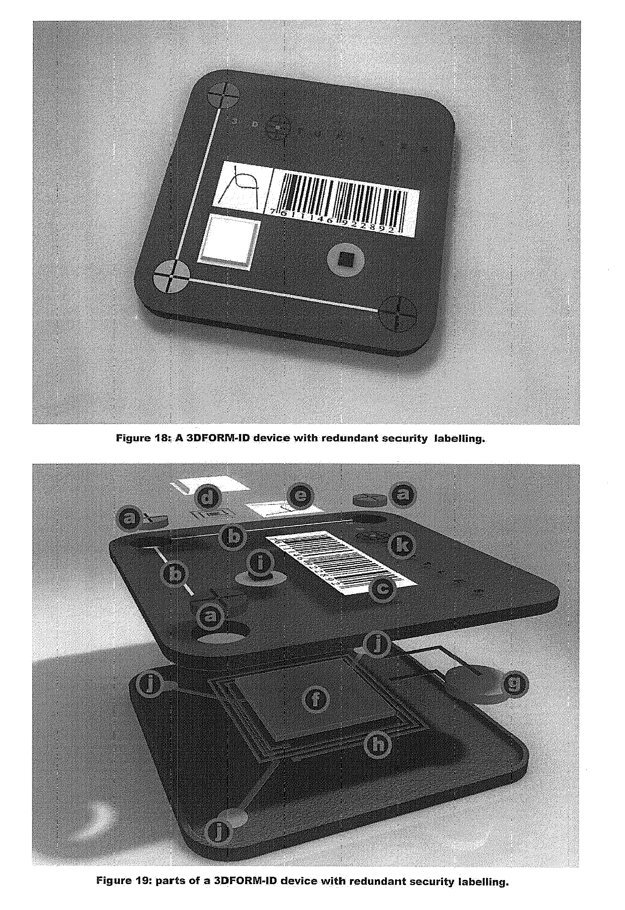

(Figure 18) shows a detailed view of an hypotetical high security identificative label, and (figure 19) shows the different graphic and electomagnetical elements included in the labelled device, in this case coloured graphic points (19.a), coloured graphic lines (19.b), bar code (19.c), an RFID containing a linked identification number (19.d), an identificative profile related to the identified object (19.e), an active memory containing the referenced 3D shape (19.f) a battery (19.g) an antenna (19.h), a pasive spot contact memory containing the same data than the active memory (19.i), active electromagnetical detectable nodes (19.j) and a geometric logo for helping into the process of positioning and orientating the identified object (19.k).

## Claims

1. A prodeeding for the use of identificative labels that contains graphical or electromagnetical references detectables or visibles by an external system, based in the european patent filing EP06381005.5 that describes a device and a proceeding named 3DFORM-ID. The proposed proceeding allows, by using an identificative label, correlating spatially the identified object with a digital file containing the tridimensional shape description of the identified object and also containing information about these spatial references, to link this description with the identified object, and being such digital file included in the own identificative label or located in an external system linked to the label by a group of reference letters or numbers or using for that other type of graphical or geometrical references. The labels must be fixed in any part of the identified object or in an external position but referenced to the identified object. The proceeding allows the detection of such graphical or electromagnetical references using cameras or other electromagnetical systems, and by using the accurate software application based in triangulation methods, obtains also the spatial position and orientation of the identified object relative to the detecction system, and also also can relates the graphical or electromagnetical references contained in the label with the spatial references contained in the file that includes the tridimesnional shape description of the identified object. Thanks to these references, located in the identificative label and in the related digital file , the software application can construct a virtual, tridimensional scene showing the virtual position and orientation of the tridimensional shape of the identified object accordingly to the position and orientation of the virtual representation of the detection system.

2. An identificative label that contains one, two, three or more graphical references that can be captured by an external system, and also includes a 3DFORM-ID memory that contains a referenced tridimensional shape of the identified object and other data related to their physical properties. This type of configuration is defined as a label with a 3DFORM device using a 3DFORM-ID memory and graphical references. The graphical references can be geometrical shapes, color points, numbers, letters or any other visual reference, located around the 3DFORM-ID memory, over the 3DFORM-ID memory or in separate labels of that label containing the 3DFORM-ID memory.

3. An identificative label that contains one, two, three or more graphical references that can be captured by an external system, and also includes an RFID device that contains a number or name linked to a digital file that contains the referenced tridimensional shape of the identified object and other data related to their physical properties. This type of configuration is defined as a label with a linked 3DFORM-ID device using an RFID and graphical references. The graphical references can be geometrical shapes, color points, numbers, letters or any other visual reference, located around the RFID device, over the RFID device or in separate labels of that label containing the RFID device.

4. An identificative label that contains one, two, three or more graphical references that can be captured by an external system, and that also includers a bar code that contains a number or name linked to a digital file that contains the referenced tridimensional shape of the identified object and other data related to their physical properties. This type of configuration is defined as a label with a linked 3DFORM-ID device using a bar code and graphical references. The graphical references can be geometrical shapes, color points, numbers, letters or any other visual reference, located around the bar code, over the bar code or in separate labels of that label containing the bar code.

5. An identificative label that contains one, two, three or more graphical references that can be captured by an external system, and that also includes a bidimensional geometrical design, or a drawing, or a group of letters or/and numbers linked to a digital file that contains the referenced tridimensional shape of the identified object and other data related to their physical properties. This type of configuration is defined as a label with a linked 3DFORM-ID device using graphical or alphanumerical identification designs and graphical references. The graphical references can be geometrical shapes, color points, numbers, letters or any other visual reference, located around these graphical or alphanumerical designs, over them or in separate labels of that label containing the identificative graphical or alphanumerical design.

6. An identificative label that contains three or more electromagnetical references that can be detected by an external system, and that also includes a 3DFORM-ID memory that contains a referenced tridimensional shape of the identified object and other data related to their physical properties. This type of configuration is defined as a label with a 3DFORM device using a 3DFORM-ID memory and electromagnetical references. These electromagnetical references can be located around the 3DFORM-ID memory, over the 3DFORM-ID memory or in separate labels of that label containing the 3DFORM-ID memory.

7. An identificative label that contains three or more electromagnetical references that can be detected by an external system, and that also includes an RFID device that contains a number or name linked to a digital file that contains the referenced tridimensional shape of the identified object and other data related to their physical properties. This type of configuration is defined as a label with a linked 3DFORM-ID device using an RFID and electromagnetical references. These electromagnetical references can be located around the RFID device, over the RFID device or in separate labels of that label containing the RFID device.

8. An identificative label that contains three or more electromagnetical references that can be detected by an external system, and that also contains a bar code that contains a number or name linked to a digital file that contains the referenced tridimensional shape of the identified object and other data related to their physical properties. This type of configuration is defined as a label with a linked 3DFORM-ID device using a bar code and electromagnetical references. These electromagnetical references can be located around the bar code, over the bar code or in separate labels of that label containing the bar code.

9. An identificative label that contains three or more electromagnetical references that can be detected by an external system, and that also contains a bidimensional geometrical design, or a drawing, or a group of letters or/and numbers linked to a digital file that contains the referenced tridimensional shape of the identified object and other data related to their physical properties. This type of configuration is defined as a label with a linked 3DFORM-ID device using graphical or alphanumerical identification designs and electromagnetical references. These electromagnetical references can be located around the graphical or alphanumerical designs, over them or in separate labels of that label containing the identificative graphical or alphanumerical design.

10. An identificative label that contains any combination of graphical or electromagnetical references that can be detected by an external system, and that also contains a 3DFORM-ID memory or linked 3DFORM-ID devices using bidimensional geometrical designs, RFIDs or code bars linked to a digital file that contains the referenced tridimensional shape of the identified object and other data related to their physical properties. This combination of electromagnetical or graphical references can be located around this 3DFORM-ID memory or linked 3DFORM-ID device configuration, over it or in separate labels of the label that contains this 3DFORM-ID memory or linked 3DFORM-ID device configuration.
